# EUROPEAN PATENT APPLICATION

(11) **EP 2 051 215 A2**
(43) Date of publication of application: **22.04.2009**
(21) Application number: 08166419.5
(22) Date of filing: 13.10.2008
(51) Int. Cl.: G07C 11/00

(54) **Counter management apparatus**

(30) Priority: 19.10.2007 JP 2007272614
(71) Applicant: LAUREL BANK MACHINES CO., LTD., Tokyo (JP)
(72) Inventor: Asakura, Mitsutaka, Minato-ku Tokyo (JP); Kaneko, Yoshiyuki, Minato-ku Tokyo (JP); Kimura, Takashi, Minato-ku Tokyo (JP)
(74) Representative: Ilgart, Jean-Christophe

(57) **Abstract**

A counter management apparatus of the present invention issues a numbered ticket based on an input operation made by a customer and calls a customer to a counter, and includes: an input unit (32A-32G) that receives an input of authentication information on a counter clerk who performs a predetermined transaction at the counter and an input of counter information associated with the counter; a specification unit (17) that, based on the authentication information received by the input unit (32A-32G), specifies a transaction that can be handled by the counter clerk from a database (13) in which the authentication information of the counter clerk and the transaction that can be handled by the counter clerk are associated and registered; and a counter information registration unit (14) in which the transaction specified by the specification unit (17) the counter information are associated and registered.

## Description

### BACKGROUND OF THE INVENTION

### Field of the Invention

This invention relates to a counter management apparatus that is used for receiving customers who are utilizing a financial institution, a government office, a hospital, or the like.

### Description of Related Art

Japanese Unexamined Patent Application, First Publication No. H10-320482 discloses a counter management apparatus that displays on a display the name of a transaction such as a deposit, transfer, exchange, and investment. When a visiting customer selects the name of a transaction using a touch panel on a display, this counter management apparatus issues a numbered slip indicating the customer's queue number in accordance with the selected transaction. When the customer's turn comes, an announcement is made by an announcement system and the customer is guided to a counter.

However, in the case of the above described counter management apparatus, typically, each counter has fixed transactions to be handled. Because of this, if, for example, if a number of customers are waiting for one particular transaction, these customers may be forced to wait for a long period of time.

### SUMMARY OF THE INVENTION

This invention provides a counter management apparatus that is capable of providing flexible counter management in accordance with transactions that can be handled by counter clerks and the level of busyness of reception counters.

In order to solve the above described problems, a counter management apparatus according to a first aspect of the present invention issues a numbered ticket based on an input operation made by a customer and calls a customer to a counter, and includes: an input unit that receives an input of authentication information on a counter clerk who performs a predetermined transaction at the counter and an input of counter information associated with the counter; a specification unit that, based on the authentication information received by the input unit, specifies a transaction that can be handled by the counter clerk from a database in which the authentication information of the counter clerk and the transaction that can be handled by the counter clerk are associated and registered; and a counter information registration unit in which the transaction specified by the specification unit the counter information are associated and registered.

According to the above described structure, when an input unit receives authentication information on a counter clerk, "a transaction that is able to be handled by a counter clerk" which corresponds to this received authentication information is specified by a specification unit from a database in which the authentication information on the counter clerk and the "a transaction that is able to be handled by a counter clerk" are associated and registered. The specified "a transaction that is able to be handled by a counter clerk" and counter information (for example, a counter number) for the counter where the input unit which received the input of the authentication information is installed can be associated, and registered in the counter information registration unit. Accordingly, it is possible to specify the transaction that can currently be handled at the respective counters based on the registration results from this counter information registration unit, and a variety of transactions can be processed in parallel at a plurality of counters in accordance with the specified transaction. Consequently, it becomes possible to perform flexible counter management that matches the skill level of a counter clerk or the level of busyness of each reception counter.

The counter management apparatus according to the first aspect of the present invention may further include a retrieval unit that retrieves from the database authentication information that matches the authentication information received by the input unit, and the specification unit specifies a transaction that is associated with the authentication information retrieved by the retrieval unit.

According to the above described structure, authentication information that matches the authentication information received by the input unit is retrieved by the retrieval unit from the database. If authentication information that matches the authentication information received by the input unit is present, the transaction that is associated with this authentication information can be specified by the specification unit. Accordingly, because it becomes possible to call a customer based on the transaction that can be handled by the counter clerk who is currently on duty at the counter, smooth counter management can be achieved.

The counter management apparatus according to the first aspect of the present invention may further include: a transaction specification unit that receives a specification of a transaction; a slip number registration unit in which a slip number and the transaction specified by the transaction specification unit are associated and registered; and an announcement control unit that announces the slip number registered in the slip number registration unit and counter information associated with the counter upon receiving a request signal requesting that a customer be called.

According to the above described structure, a slip number is associated with a transaction that is specified by the transaction specification unit, and they are registered in the slip number registration unit. Because of this, when a counter clerk calls a customer and requests that the customer approach a counter, the slip number and the counter information for the counter from which the call was made are announced by the announcement control unit based on the transaction which can be handled by this counter clerk, it is possible to guide the customer to the counter smoothly.

A counter management apparatus according to a second aspect of the present invention includes: an operation unit that receives an input operation made by a customer; a ticket issuing unit that issues a numbered ticket on which a slip number is printed; a call unit that announces a slip number and guides a customer to a specific counter from among a plurality of counters; a control unit that controls issuing of a numbered ticket by the ticket issuing unit based on the input operation received by the operation unit, and controls an announcement of a slip number by the call unit; and an input unit that receives an input of authentication information on a counter clerk, the control unit specifying counter information associated with a counter where the input unit receives the input of the authentication information, and retrieving authentication information that matches the authentication information received by the input unit from a database in which a transaction that can be handled by the counter clerk and the authentication information of the counter clerk are associated and registered, specifying a transaction that is associated with the retrieved authentication information, and associating the specified transaction with the counter information and then registering the specified transaction and the counter information in a counter information registration unit.

According to this structure, the input unit receives the authentication information of a counter clerk. The control unit specifies "a transaction that is able to be handled by a counter clerk" that corresponds to this authentication information, and the specified "a transaction that is able to be handled by a counter clerk" and the counter information of the counter which received the input of the authentication information are associated and registered in the counter information registration unit. Because of this, when, for example, customers to whom numbered tickets have been issued are all requiring a specific transaction, it is possible to specify the transactions that can currently be handled at the respective counters based on the registration results from the counter information registration unit. When, for example, a transaction which a number of customers are all requiring at the same time so that there is a lengthy wait time for this transaction can be processed by a plurality of counter clerks, the call units of those counters which are currently free from among this plurality of counters are able to call customers in sequence and process them in parallel. As a result, the large number of customers can be dispersed between the plurality of counters and their transactions can be processed rapidly. Accordingly, it becomes possible to perform flexible counter management that matches the transaction which is able to be handled by a counter clerk or the level of busyness of each reception counter.

In the counter management apparatus according to the second aspect of the present invention, the operation unit may receive a specification of a transaction, the input unit may receive a call for a customer, and the control unit may associate a transaction specified by the operation unit with a slip number and then register the transaction and the slip number in a slip number registration unit, and when the input unit receives a call for a customer, the control unit may cause the slip number registered in the slip number registration unit and the counter information associated with the counter to be announced by the call unit.

According to this structure, when a transaction has been specified by the operation unit, the control unit is able to associate the transaction specified by the operation unit with a slip number and register them in the slip number registration unit. Accordingly, when the input unit has received a call for a customer, the control unit causes the slip number and the counter information associated with the relevant counter to be announced quickly by the announcement control unit based on the transaction that is able to be handled by the counter clerk who called the customer. As a result, it is possible to guide the customer to the counter smoothly.

In the counter management apparatus according to the first and second aspects of the present invention, the transaction registered in the database which can be handled by the counter clerk may be updated.

According to this structure, it is also possible to update the transaction that can be handled by the counter clerk that is registered in the database if this is necessary. Because of this, for example, even if there is a change in the skill level of the counter clerk or if there is a clerk transfer or the like, this can be responded to flexibly. As a result, it is possible to achieve even smoother counter management.

### BRIEF DESCRIPTION OF THE DRAWINGS

FIG. 1 is a block diagram showing a counter management apparatus according to an embodiment of the present invention.
FIG. 2 shows a table in which authentication numbers and handled transactions are associated and registered, and that is stored in a database according to the embodiment of the present invention.
FIG. 3 shows a table in which counter numbers and handled transactions are associated and registered, and that is stored in a counter information registration unit according to the embodiment of the present invention.
FIG. 4 shows a table in which slip numbers and specified transactions are associated and registered, and that is stored in a slip number registration unit according to the embodiment of the present invention.

### DETAILED DESCRIPTION OF THE INVENTION

A counter management apparatus according to an embodiment of the present invention will now be described with reference made to the drawings.

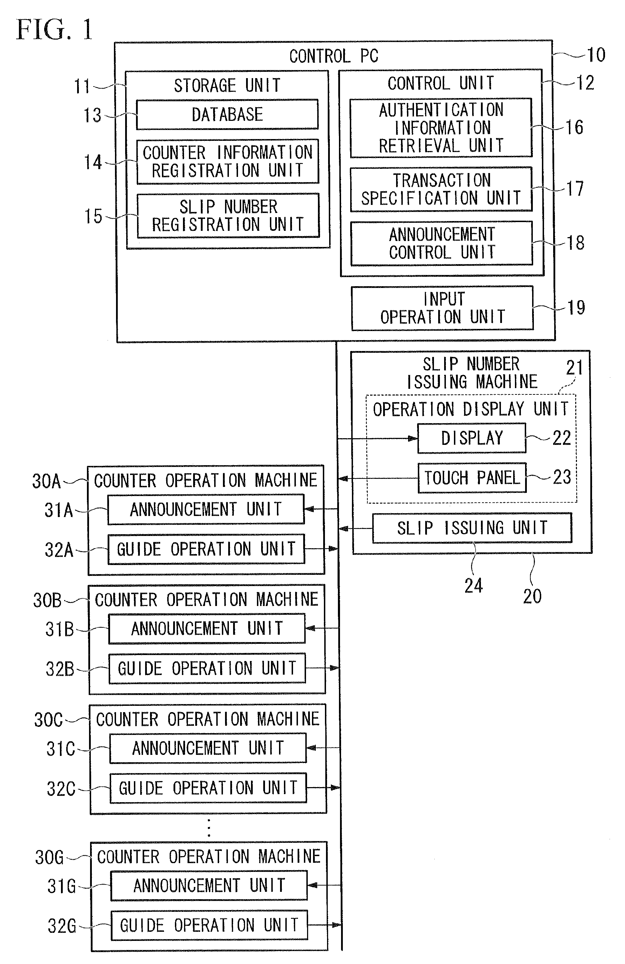

FIG. 1 shows the overall structure of the counter management apparatus of this embodiment. This counter management apparatus is located in a financial institution such as a bank or the like. The counter management apparatus includes a slip number issuing machine 20, counter operation machines 30A through 30G, and a control PC (personal computer) 10. The slip number issuing machine 20 is located in a predetermined position on a floor, and is operated by a visiting customer or by a floor manager. The counter operation machines 30A through 30G are installed for each reception counter located on the floor, and, based principally on operations by a counter clerk, announce slip numbers and guide customers to a counter. The control PC 10 is connected to the slip number issuing machine 20 and the counter operation machines 30A through 30G, and controls the overall system operations. This embodiment is an example of a case in which reception counters (not shown) are provided in eight locations. Note that because the counter operation machines 30A through 30G have an identical structure, only the counter operation machine 30A is described here and a detailed description of the remaining counter operation machines 30B through 30G is omitted.

The counter operation machine 30A includes an announcement unit (i.e., a call unit) 31A and a guide operation unit 32A. When the counter operation machine 30A receives an input made by, for example, a counter clerk from the guide operation unit 32A in order to call a predetermined customer, it transmits a request signal to the control PC 10 requesting the slip number which is next in the calling order. When the counter operation machine 30A receives the transmitted slip number from the control PC 10, it displays this slip number on the announcement unit 31A and outputs audio, so that the customer being called is guided to that reception counter.

The guide operation unit 32A receives the input of the authentication numbers of counter clerks and counter numbers which are counter information that identifies the reception counter. The authentication numbers and counter number information which are received by the guide operation unit 32A are transmitted to the control PC 10.

The slip number issuing machine 20 includes an operation display unit (i.e., a transaction specification unit) 21 and a slip issuing unit 24. The operation display unit 21 is formed by a display 22 and a touch panel (i.e., operation unit) 23. The display 22 is controlled by the control PC 10 so as to display a plurality of transactions. The touch panel 23 is provided on the display 22 and, as a result of being touched by a customer or a floor manager, receives operation inputs that are used to designate a specific transaction from among the plurality of transactions displayed on the display 22. Results of operation inputs to the touch panel 23 are transmitted to the control PC 10. Transactions such as, for example, "Account Transfer - Tax Payment", "Term Deposit", "Home Loan", and the like are displayed on the display 22.

The slip issuing unit 24 prints slip numbers issued by the control PC 10 based on input results to the touch panel 23 on a slip and then issues this slip. The medium which is printed by the slip issuing unit 24 is not limited to being a slip, and it is also possible, for example, to use a card on which slip numbers can be repeatedly printed and then deleted.

The control PC 10 is located at a supervisor's desk or the like inside the office. The control PC 10 is set so as to issue a slip number and transmit this slip number to the slip number issuing machine 20 when it receives transmitted results of an operation input to the touch panel 23 from the slip number issuing machine 20. The control PC 10 includes a storage unit 11 which is formed by a storage medium such as a hard disk or the like, and a control unit 12 that executes various types of processing based on various input information and programs. The storage unit 11 has a database 13, a counter information registration unit 14, and a slip number registration unit 15.

Transactions that can be handled by the counter clerk (referred to below simply as 'handled transactions'), and authentication numbers which are authentication information concerning the counter clerks are mutually associated and registered in advance in the database 13. The authentication numbers for the counter clerks are, for example, individual numbers that are set in advance for all of the counter clerks employed at the office. The handled transactions are transactions which are handled by a specific counter clerk identified by an authentication number, and are individually set in advance for each supervisor. Handled transactions that are registered in the database 13 can be modified and updated based on an input operation from an input operation unit 19 such as a keyboard which is connected to the control unit 12 of the control PC 10.

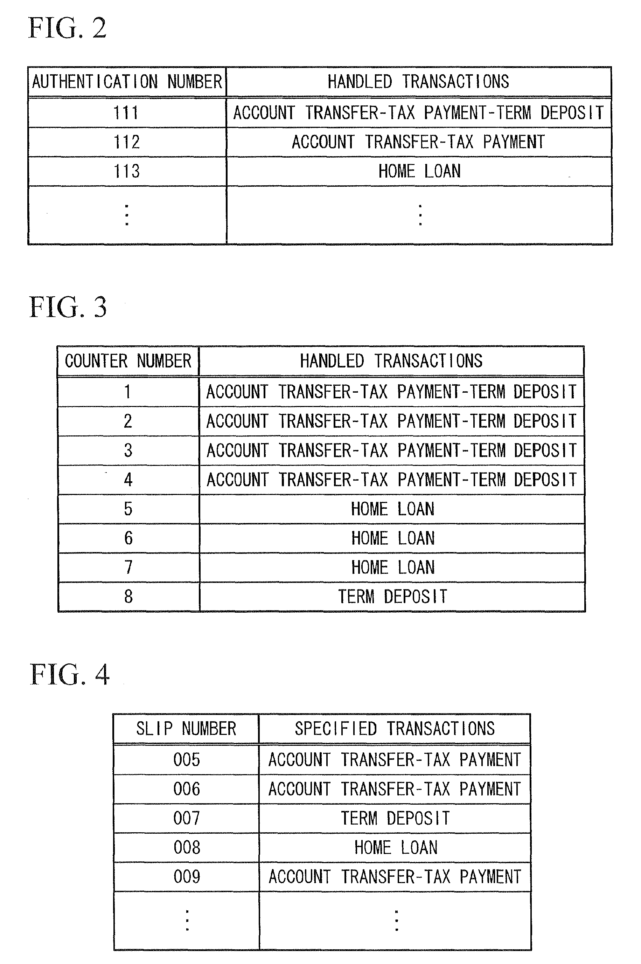

FIG. 2 shows an example of a table stored in the database 13. In this table, the handled transactions "Account Transfer - Tax Payment - Term Deposit" are associated with the authentication number "111" and registered, the handled transactions "Account Transfer - Tax Payment" are associated with the authentication number "112" and registered, and the handled transaction "Home Loan" is associated with the authentication number "113" and registered.

Counter numbers which are counter information which is allocated in advance for each reception counter and handled transactions are associated and registered in the counter information registration unit 14. FIG. 3 shows an example of a table stored in the counter information registration unit 14. In this table, the handled transactions "Account Transfer - Tax Payment - Term Deposit" are associated with the respective counter numbers "1" to "4", the handled transaction "Home Loan" is associated with the respective counter numbers "5" to "7", and the handled transaction "Term Deposit" is associated with the counter number "8".

When a slip is issued by the slip number issuing machine 20, the issued slip number and the transaction specified by the touch panel 23 (referred to below simply as the 'specified transaction') are associated and registered in the slip number registration unit 15. FIG. 4 shows an example of a table stored in the slip number registration unit 15. In this table, the slip numbers "005" to "009" and the like issued by the control PC 10 are arranged in the order in which they are issued. Furthermore, in this table, the specified transactions "Account Transfer - Tax Payment" are associated with the respective slip numbers "005", "006", and "009", the specified transaction "Term Deposit" is associated with the slip number "007", and the specified transaction "Home Loan" is associated with the slip number "008".

The control unit 12 includes an authentication information retrieval unit (i.e., a retrieval unit) 16, a transaction specification unit (i.e., a specification unit) 17, and an announcement control unit 18. The authentication information retrieval unit 16 retrieves from among the plurality of authentication numbers which are registered in the database 13 an authentication number that matches the authentication number input into the guide operation unit (i.e., the input unit) 32A of the counter operation machine 30A.

The transaction specification unit 17 specifies a handled transaction that is associated with the authentication number in the database 13 that matches the authentication number retrieved by the authentication number retrieval unit 16, namely, the authentication number input into the guide operation unit 32A. The handled transaction that is specified by the transaction specification unit 17 is associated with a counter number which is counter information and is registered in the table of the counter information registration unit 14.

Based on request signals from the guide operation unit 32A that are used to call a customer, the announcement control unit 18 transmits to the announcement unit 31A of the counter operation machine 30A information on slip numbers and counter numbers that are to be announced by the announcement unit 31A of the counter operation machine 30A, namely, information on the slip numbers registered in the slip number registration unit 15 and on the counter number of the reception counter from which the request to call a customer was made.

Next, an operation of the above described counter management apparatus will be described.

Firstly, when the counter management apparatus starts up when transactions commence in an office, the control unit 12 of the control PC 10 performs initialization. Next, the control unit 12 performs control in order to display a transaction selection screen which is a list display of transactions on the screen of the slip number issuing machine 20.

When the counter clerk is on duty at a predetermined reception counter, and an authentication number is input into the guide operation unit 32A of the counter operation machine 30A by this counter clerk, the authentication information retrieval unit 16 of the control PC 10 retrieves the authentication number that matches the authentication number input by means of the guide operation unit 32A from the table in the database 13. If the authentication number that matches the authentication number input by means of the guide operation unit 32A is present in the table in the database 13, the handled transactions that are associated with the authentication number retrieved by the authentication information retrieval unit 16 are specified by the transaction specification unit 17. Furthermore, these specified handled transactions are associated with the counter number of the reception counter where the authentication number was input and are then registered in the counter information registration unit 14 of the storage unit 11. For example, if the counter number of the reception counter where the counter operation machine 30A is installed is "1", then if the authentication number "111" is input into the counter operation machine 30A, the handled transactions "Account Transfer - Tax Payment - Term Deposit" which are associated with the authentication number "111" registered in advance in the database 13 are associated with the counter number "1" and stored in the counter information registration unit 14.

When an operation to specify a transaction is performed by a visiting customer or by a floor manager or the like using the touch panel 23 on the transaction selection screen displayed on the display 22, the information on this specified transaction is sent to the control PC 10. Specifically, if "Account Transfer - Tax Payment" is specified, information on the specified transactions "Account Transfer - Tax Payment" is sent from the slip number issuing machine 20 to the control PC 10.

When the control unit 12 of the control PC 10 receives the information on the specified transactions, it issues a slip number and controls the slip number issuing machine 20 such that a slip on which this slip number is printed is issued. The control unit 12 then associates this issued slip number with the information on the specified transactions which has been specified using the transaction selection screen on the display 22, and registers these in the slip number registration unit 15. Specifically, if the control PC 10 receives information on the specified transactions "Account Transfer - Tax Payment", and, as is shown in FIG. 4, the smallest number from among the numbers not yet issued is "005", then the control PC 10 issues this "005" as the slip number and causes this to be printed on a slip and issued to the customer by the slip issuing unit 24. The control unit 12 then associates the specified transactions "Account Transfer - Tax Payment" with the issued slip number "005", and registers them in the slip number registration unit 15.

Next, when a predetermined input operation by the counter clerk is made using the guide operation unit 32A in order to guide the customer to the reception counter, and a request signal for the slip number to be called next is sent to the control PC 10, the control unit 12 of the control PC 10 specifies from the table in the counter information registration unit 14 the handled transactions that are associated with the counter number of the reception counter where this input operation was made.

Specifically, it will be assumed that, for example, the counter number of the reception counter where the guide operation unit 32A was operated is "1". In this case, the table in the counter information registration unit 14 is referred to, and the handled transactions "Account Transfer - Tax Payment - Term Deposit" which are associated with the counter number "1" are called (see FIG. 3). Next, the latest slip number from among the slip numbers issued in the specified transactions included in these handled transactions "Account Transfer - Tax Payment - Term Deposit" is retrieved from the table in the slip number registration unit 15. In the case of the table shown in FIG. 4, the slip numbers with which the specified transactions included in the handled transactions "Account Transfer - Tax Payment - Term Deposit" are associated as follows: the specified transactions "Account Transfer - Tax Payment" are associated with the slip numbers "005", "006" and "009", and the specified transactions "Term Deposit" is associated with the slip number "007". Accordingly, in this case, the slip number "005" which is the most recent number from among these slip numbers is specified.

The control unit 12 transmits the slip number specified by the slip number registration unit 15 to the counter operation machine 30A whose guide operation unit 32A was operated. As a result, the slip number specified in the table in the slip number registration unit 15 and the counter number of the reception counter where the counter operation machine 30A is installed are announced by the announcement unit 31A of the counter operation machine 30A. Consequently, the customer recognizes the call for the slip number printed on the slip which the customer is holding, and also recognizes the counter number to which the customer should go and then goes to this counter number.

Accordingly, according to the above described embodiment, the authentication number of a counter clerk is input via the input operation unit 19. Handled transactions that correspond to the input authentication number are specified by the transaction specification unit 17 in the database 13. These specified handled transactions and the counter number of the reception counter where the authentication number was input are then associated, and are then registered in the table in the counter information registration unit 14. Accordingly, it is possible, for example, to specify the handled transactions that are able to be processed at each counter based on registration results from this counter information registration unit 14, and a variety of transactions are able to be processed in parallel at a plurality of counters in accordance with the specified handled transactions. As a result, it becomes possible to perform flexible counter management that matches the skill level of a counter clerk or the level of skill of each reception counter.

Moreover, in a case where an authentication number that matches the authentication number input into the input operation unit 19 is retrieved by the control unit 12 from the table in the database 13, if a matching authentication number is present, the transaction that is associated with this authentication number can be specified by the transaction specification unit 17. Accordingly, it becomes possible to call a customer based on the handled transactions of the counter clerk who is on duty at the counter at that particular moment, thereby allowing smooth counter management to be achieved.

Furthermore, slip numbers are associated with specified transactions that are specified by the operation display unit 21, and are registered in the slip number registration unit 15. Because of this, when a counter clerk calls a customer and guides the customer to a reception counter, the slip number and the counter number of the relevant reception counter are quickly announced by the announcement unit 31A based on the handled transactions of the counter clerk who requested the call to the customer. Accordingly, the customer can be guided smoothly to the counter.

In addition, when a transaction has been specified by the guide operation unit 32A, it is possible for the specified transaction to be associated with a slip number and then registered in the slip number registration unit 15 by the control unit 12. Because of this, when a request signal requesting that a customer be called is received, the slip number can be quickly announced by the announcement unit 31A based on the handled transactions of the counter clerk who requested that the customer be called, thereby enabling the customer to be guided smoothly to the counter.

Moreover, it is also possible to update the handled transactions that are registered in the database 13 if this is necessary using the input operation unit 19. Because of this, for example, even if there is a change in the skill level of the counter clerk or a staff transfer or the like, this can be responded to flexibly. As a result, it is possible to achieve even smoother counter management.

In the above described embodiment, a structure is employed in which the counter clerk and the reception counter slip order can be identified using numbers as in the case of the authentication numbers, counter numbers, and slip numbers, however, provided that identification is still possible, then the present invention is not limited to using numbers. A different method is to make identifications using characters such as alphabet characters or marks or the like.

Furthermore, in the above described embodiment, a description is given of a case in which processing is performed in parallel at a plurality of reception counters based on the handled transactions of the counter clerks. As another method, for example, in a case where handled transactions are set for each reception counter, only when customers are queuing at the reception counter for a specific handled transaction and thereby causing a predetermined waiting time to be exceeded, other reception counters process the specific handled transactions.

Moreover, a case is described above in which the slip number and the counter number are announced by the announcement unit 31A, however, it is also possible for only the slip number to be announced.

Furthermore, a case is described above in which only one slip number issuing machine 20 is installed, however, it is also possible to employ a structure in which a plurality of slip number issuing machines 20 are installed on the same floor.

In addition, in the above described embodiment, the description uses the counter operation machine 30A as an example, however, it is also possible to individually manage the counter operation machines 30B to 30G in the same way.

While preferred embodiments of the invention have been described and illustrated above, it should be understood that these are exemplary of the invention and are not to be considered as limiting. Additions, omissions, substitutions, and other modifications can be made without departing from the spirit or scope of the present invention. Accordingly, the invention is not to be considered as limited by the foregoing description and is only limited by the scope of the appended claims.

## Claims

1. A counter management apparatus that issues a numbered ticket based on an input operation made by a customer and calls a customer to a counter, comprising:
an input unit (32A-32G) that receives an input of authentication information on a counter clerk who performs a predetermined transaction at the counter and an input of counter information associated with the counter;
a specification unit (17) that, based on the authentication information received by the input unit (32A-32G), specifies a transaction that can be handled by the counter clerk from a database (13) in which the authentication information of the counter clerk and the transaction that can be handled by the counter clerk are associated and registered; and
a counter information registration unit (14) in which the transaction specified by the specification unit (17) the counter information are associated and registered.

2. The counter management apparatus according to claim 1, further comprising a retrieval unit (16) that retrieves from the database authentication information that matches the authentication information received by the input unit (32A-32G),
wherein the specification unit (17) specifies a transaction that is associated with the authentication information retrieved by the retrieval unit (16).

3. The counter management apparatus according to claim 1 or 2, further comprising:
a transaction specification unit (21) that receives a specification of a transaction;
a slip number registration unit (15) in which a slip number and the transaction specified by the transaction specification unit (21) are associated and registered; and
an announcement control unit (18) that announces the slip number registered in the slip number registration unit (15) and counter information associated with the counter upon receiving a request signal requesting that a customer be called.

4. A counter management apparatus comprising:
an operation unit (23) that receives an input operation made by a customer;
a ticket issuing unit (24) that issues a numbered ticket on which a slip number is printed;
a call unit (31A-31G) that announces a slip number and guides a customer to a specific counter from among a plurality of counters;
a control unit (12) that controls issuing of a numbered ticket by the ticket issuing unit (24) based on the input operation received by the operation unit (23), and controls an announcement of a slip number by the call unit (31A-31G); and
an input unit (32A-32G) that receives an input of authentication information on a counter clerk,
the control unit (12) specifying counter information associated with a counter where the input unit (32A-32G) receives the input of the authentication information, and retrieving authentication information that matches the authentication information received by the input unit (32A-32G) from a database (13) in which a transaction that can be handled by the counter clerk and the authentication information of the counter clerk are associated and registered, specifying a transaction that is associated with the retrieved authentication information, and associating the specified transaction with the counter information and then registering the specified transaction and the counter information in a counter information registration unit (14).

5. The counter management apparatus according to claim 4, wherein
the operation unit (23) receives a specification of a transaction,
the input unit (32A-32G) receives a call for a customer, and
the control unit (12) associates a transaction specified by the operation unit (23) with a slip number and then registers the transaction and the slip number in a slip number registration unit (15), and when the input unit (32A-32G) receives a call for a customer, the control unit (12) causes the slip number registered in the slip number registration unit (15) and the counter information associated with the counter to be announced by the call unit (31A-31G).

6. The counter management apparatus according to any one of claims 1 to 5, wherein the transaction registered in the database (13) which can be handled by the counter clerk can be updated.
